(19) Europäisches Patentamt / European Patent Office / Office européen des brevets

(11) **EP 3 910 301 B1**

(12) **EUROPEAN PATENT SPECIFICATION**

(45) Date of publication and mention
of the grant of the patent:
**11.10.2023 Bulletin 2023/41**

(21) Application number: **20197043.1**

(22) Date of filing: **18.09.2020**

(51) International Patent Classification (IPC):
**G01H 9/00** $^{(2006.01)}$ **B61L 23/04** $^{(2006.01)}$

(52) Cooperative Patent Classification (CPC):
**G01H 9/004; B61L 23/044**

(54) **RAIL FRACTURE DECISION SYSTEM AND METHOD FOR DECIDING RAIL FRACTURE USING THE SAME**

SCHIENENBRUCHBESTIMMUNGSSYSTEM UND VERFAHREN ZUR BESTIMMUNG DES SCHIENENBRUCHS UNTER VERWENDUNG DAVON

SYSTÈME DE DÉCISION DE RUPTURE DE RAIL ET PROCÉDÉ DE DÉCISION DE RUPTURE DE RAIL L'UTILISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.05.2020 KR 20200056429**

(43) Date of publication of application:
**17.11.2021 Bulletin 2021/46**

(73) Proprietor: **Korea Railroad Research Institute
Uiwang-si, Gyeonggi-do 16105 (KR)**

(72) Inventors:
• **KIM, Jungtai**
**06592 Seoul (KR)**
• **YOON, Yong Ki**
**16343 Gyeonggi-do (KR)**
• **LEE, Jaeho**
**16295 Gyeonggi-do (KR)**
• **KIM, Yongkyu**
**Cheonan-si, Chungcheongnam-do 31156 (KR)**
• **KIM, Gil Dong**
**05698 Seoul (KR)**
• **CHUN, Hyeyeun**
**16080 Gyeonggi-do (KR)**

(74) Representative: **Gaunt, Thomas Derrick et al
Lewis Silkin LLP
Arbor
255 Blackfriars Road
London SE1 9AX (GB)**

(56) References cited:
**WO-A1-2018/048308**

• **WIESMEYR CHRISTOPH ET AL: "Real-Time Train Tracking from Distributed Acoustic Sensing Data", APPLIED SCIENCES, vol. 10, no. 2, 8 January 2020 (2020-01-08), page 448, XP055781144, DOI: 10.3390/app10020448**
• **CEDILNIK GREGOR ET AL: "Advances in Train and Rail Monitoring with DAS", 26TH INTERNATIONAL CONFERENCE ON OPTICAL FIBER SENSORS, 1 January 2018 (2018-01-01), page ThE35, XP055781133, Washington, D.C. DOI: 10.1364/OFS.2018.ThE35 ISBN: 978-1-943580-50-7 Retrieved from the Internet: URL:https://www.osapublishing.org/DirectPDFAccess/00A40922-B62A-4B8E-A5BE59D283E742D 6_402279/OFS-2018-ThE35.pdf?da=1&id=402279 &uri=OFS-2018-ThE35&seq=0&mobile=no>**

EP 3 910 301 B1

**Description**

BACKGROUND

1. Field of Disclosure

The present disclosure of invention relates to a rail fracture decision system and a method for deciding rail fracture using the rail fracture decision system, and more specifically the present disclosure of invention relates to a rail fracture decision system based on a vibration signal according to an approach of a train, using distributed acoustic sensing (DAS), and a method for deciding rail fracture using the rail fracture decision system.

2. Description of Related Technology

Generally, to detect or decide a rail fracture, is very important to prevent a negligent accident and to improve reliability of a train.

For detecting or deciding the rail fracture, an electrical signal or a vibration signal measured from the rail is conventionally used.

For example, Japanese patent No. 6297280 disclosed the rail fracture decision apparatus, and in the apparatus, a plurality of vibration sensors is fixed to the rail, and then as the train passes through the rail, the measured signal from the vibration sensors are obtained to decide whether the rail is fractured at the position around the sensors.

WO 2018/048308 A1 discloses a railway track condition monitoring system including a plurality of sensors installed on a rail of the track and spaced by a predetermined distance from each other for detecting a partial or complete disruption of a rail of the railway track.

Wiesmeyr Christoph ET AL: "Real-Time Train Tracking from Distributed Acoustic Sensing Data" discloses an algorithm that extracts the positions of moving trains for a given point in time from DAS signals which are obtained by injecting light pulses into an optical fiber close to the railway tracks and measuring the Rayleigh backscatter.

Cedilnik Gregor ET AL: "Advances in Train and Rail Monitoring with DAS" discloses a technique to transform railway DAS data, which carries information about the train-rail interaction, to a rail view or train view to simplify analysis and reveal valuable rail and train properties.

However, in the apparatus using the vibration sensors, the vibration sensors should be positioned at every position through which the train passes, and the measured signal is merely obtained the predetermined positions where the sensors are disposed. In addition, the sensors also measure the vibrations generated by other sources except for the train, for example, the vibrations from a construction work and so on adjacent to the sensors. Thus, the signals are often unreliable.

Recently, distributed acoustic sensing (DAS) is studied to be used for deciding the rail fracture. In DAS, a signal with a predetermined frequency is received from an optical cable, and a distorted signal due to the vibration is analyzed to detect or decide the position or the size of the vibration.

However, in using DAS for deciding the rail fracture, the decision may be failed due to the similar vibration from outside. In addition, the decision may be failed or the database should be changed when the vibration characteristics in a predetermined rail section is changed due to the construction work and so on.

SUMMARY

The present invention is developed to solve the above-mentioned problems of the related arts.

The present invention provides a rail fracture decision system according to claim 1 based on a vibration signal according to an approach of a train, using distributed acoustic sensing (DAS), capable of minimizing an effect on a train operation system and deciding the rail fracture more efficiently and correctly even when the rail fracture occurs around a combining joint between the portions of the rail.

In addition, the present invention also provides a method for deciding whether or not a rail fracture occurs, according to claim 5, using the rail fracture decision system.

According to the main embodiment, the rail fracture decision system includes a measuring position setup part, a signal measuring part, a data processing part and a decision part. The measuring position setup part is configured to determine a plurality of measuring positions having a reference point, and the measuring positions are different from each other. The signal measuring part comprising vibration sensors configured to measure vibration signals at each of the measuring positions, when a train passes through the measuring positions having the reference point. The data processing part is configured to calculate a maximum value at a predetermined frequency range on the measured vibration signals. The decision part is configured to calculate variation of the vibration signals at the measuring positions, based on the calculated maximum values, and to decide whether a rail is fractured at the reference point. The measuring positions where the vibration sensors are disposed include the reference point, a first measuring position, a second measuring position and a third measuring position. The first measuring position is spaced apart from the reference point by a first distance, along a train direction. The second measuring position is spaced apart from the reference point by the first distance, along a direction opposite to the train direction. The third measuring position is spaced apart from the second measuring position by the first distance, along the direction opposite to the train direction. The decision part includes a first decision part and a second decision part. The first decision part is configured to decide whether there is a rail failure at the reference point, based on whether a difference between the maximum value at the first measuring position and the maximum value at the reference point is less than a predetermined reference value. The second decision part is configured to decide whether there is a rail failure at the reference point, based on whether the difference between the maximum value at the first measuring position and the maximum value at the reference point, is less than twice of a larger value between a first difference and a second difference. The first difference is a difference between the maximum value at the second measuring position and the maximum value at the third measuring position. The second difference is a difference between the maximum value at the reference point and the maximum value at the second measuring position.

In an embodiment, the first distance may be changed along a train speed, and the first distance may be about 20 m when the train speed is less than about 70 km/h.

In an embodiment, the data processing part may be configured to calculate the maximum value at the frequency range between about 50 Hz and about 130 Hz, from the vibration signals measured at each of the reference point, the first measuring position, the second measuring position and the third measuring position.

In an embodiment, the data processing part may be configured to calculate the sum of the vibration signals at the frequency range between about 50 Hz and about 130 Hz, from the vibration signals measured at each of the reference point, the first measuring position, the second measuring position and the third measuring position.

In an example, the vibration signals may be received via using distributed acoustic sensing (DAS).

According to the main embodiment, in a method for deciding whether or not a rail fracture has occurred, a plurality of measuring positions having a reference point is determined. The measuring positions are different from each other. Vibration signals at each of the measuring positions are measured, when a train passes through the measuring positions having the reference point. A maximum value is calculated at a predetermined frequency range on the measured vibration signals. Variation of the vibration signals are calculated at the measuring positions, based on the calculated maximum values, and to decide whether a rail is fractured at the reference point.

The measuring positions include the reference point, a first measuring position, a second measuring position and a third measuring position. The first measuring position is spaced apart from the reference point by a first distance, along a train direction. The second measuring position is spaced apart from the reference point by the first distance, along a direction opposite to the train direction. The third measuring position is spaced apart from the second measuring position by the first distance, along the direction opposite to the train direction.

In the deciding whether the rail is fractured, the rail is decided not to be fractured at the reference point when a difference between the maximum value at the first measuring position and the maximum value at the reference point is less than a predetermined reference value. In the deciding whether the rail is fractured, the rail is decided to be fractured at the reference point, when satisfying first and second conditions. The first condition is that, the difference between the maximum value at the first measuring position and the maximum value at the reference point is more than a predetermined reference value. The second condition is that, the difference between the maximum value at the first measuring position and the maximum value at the reference point, is more than twice of a larger value between a first difference and a second difference. Here, the first difference is a difference between the maximum value at the second measuring position and the maximum value at the third measuring position. In addition, the second difference is a difference between the maximum value at the reference point and the maximum value at the second measuring position.

In an embodiment, in the calculating the maximum value, the maximum value may be calculated at the frequency range between about 50 Hz and about 130 Hz, from the vibration signals measured at each of the reference point, the first measuring position, the second measuring position and the third measuring position.

In an embodiment, in the calculating the maximum value, the sum of the vibration signals may be calculated at the frequency range between about 50 Hz and about 130 Hz, from the vibration signals measured at each of the reference point, the first measuring position, the second measuring position and the third measuring position.

In a further advantageous embodiment, the predetermined reference value may be about 10 $p\varepsilon$.

According to the present invention, vibration signals increasing at the reference point and the measuring positions are used for deciding whether there was a rail fracture, which means that a relative signal variation among the reference point and the measuring positions is calculated. Even though the vibrations are caused by an environmental sources around the rail, the signals are not distorted and thus the rail fracture decision may be more corrected and the database may not need to be updated frequently.

Here, considering the rail standard and the data using DAS, the distances between the reference point and the measuring positions may be determined as, for example, about 20 m.

In addition, the vibration signals are measured using the DAS, the signal at a predetermined position and a predetermined time is detected more easily and more efficiently, using an optical cable disposed under the ground adjacent to the rail.

In addition, the occurrence of a rail fracture is decided based on the maximum value or the sum of the measured value at the frequency range between about 50 Hz and about 130 Hz, from the vibration signals of each of the measuring positions, and thus, the signal under the frequency of about 50 Hz, in which the friction or the impact vibration signal between a wheel of the train and the rail is transmitted, is escaped. Thus, the occurrence of a rail fracture may be decided more correctly.

In addition, a plurality of measuring positions are used to decide the occurrence of a rail fracture. instead of a single position, and the relatively increased vibration signals among the measuring positions and the plurality of deciding references are used to decide the rail fracture. Thus, the occurrence of a rail fracture may be decided more correctly, and the reliability of the decision may be increased.

BRIEF DESCRIPTION OF THE DRAWINGS

FIG. 1 is a block diagram illustrating a rail fracture decision system according to an example embodiment of the present invention;

FIG. 2 is a graph showing a signal measuring state using the rail fracture decision of FIG. 1;

FIG. 3 is a conceptual diagram illustrating an example distance between a measuring position and a fracture point due to a difference of a signal measuring position in the rail fracture decision of FIG. 1;

FIG. 4 is a flow chart showing a method for deciding rail fracture using the rail fracture decision system of FIG. 1;

FIGS. 5A and 5B are graphs showing a relation between a distance and a refractive index in a welded rail; and

FIGS. 6A and 6B are graphs showing a relation between a distance and a refractive index in a joint rail.

DETAILED DESCRIPTION

The invention is described more fully hereinafter with Reference to the accompanying drawings, in which embodiments of the invention are shown. The present invention is not intended to be limited to the embodiments shown here, but is to be accorded the widest scope consistent with the appended claims. In the drawings, the size and relative sizes of layers and regions may be exaggerated for clarity.

The invention is described more fully hereinafter with reference to the accompanying drawings, in which embodiments of the invention are shown.

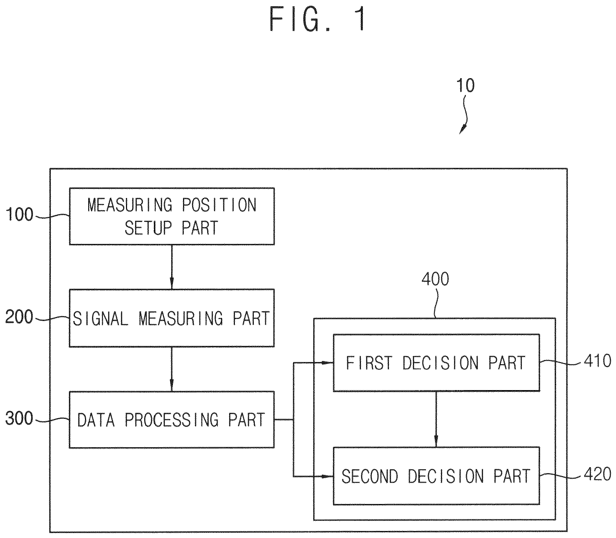

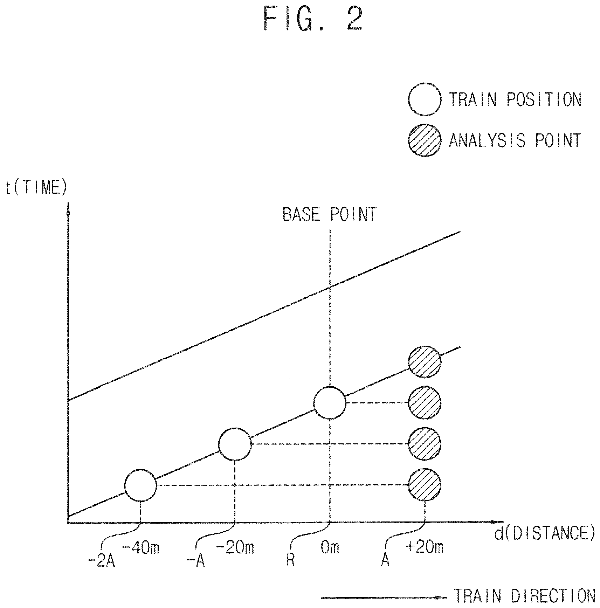

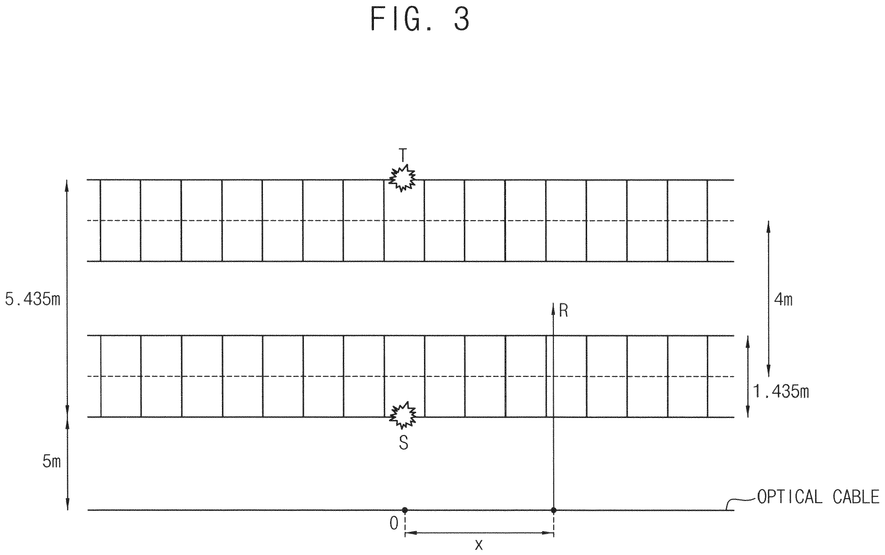

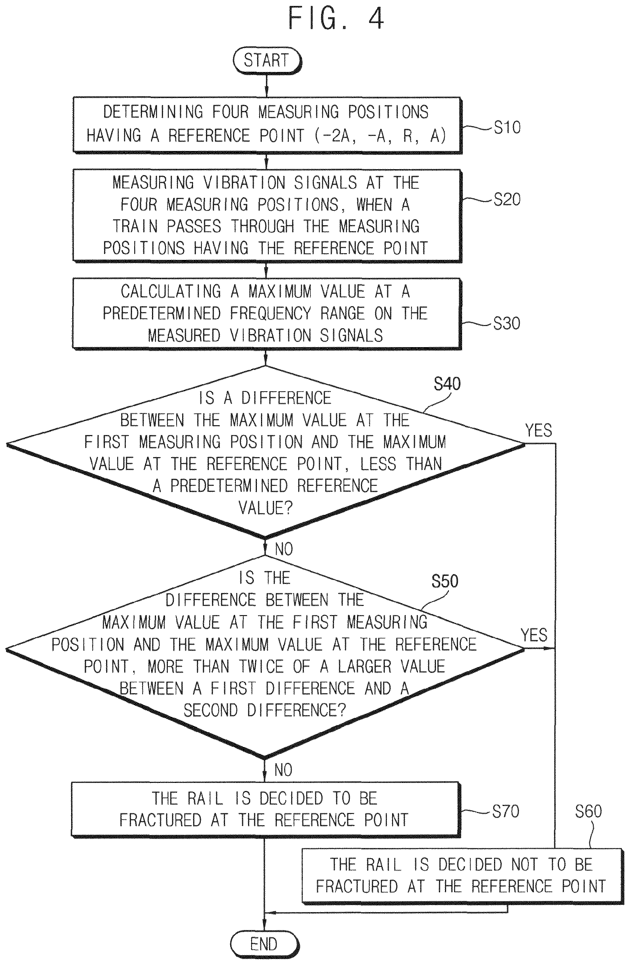

FIG. 1 is a block diagram illustrating a rail fracture decision system according to an example embodiment of the present invention. FIG. 2 is a graph showing a signal measuring state using the rail fracture decision of FIG. 1. FIG. 3 is a conceptual diagram illustrating an example distance between a measuring position and a fracture point due to a difference of a signal measuring position in the rail fracture decision of FIG. 1. FIG. 4 is a flow chart showing a method for deciding rail fracture using the rail fracture decision system of FIG. 1.

Referring to FIG. 1, the rail fracture decision system 10 according to an exemlary embodiment of the invention includes a measuring position setup part 100, a signal measuring part 200, a data processing part 300 and a decision part 400, and here, the decision part 400 includes first and second decision parts 410 and 420.

Hereinafter, referring to FIG. 1, FIG. 2, FIG. 3 and FIG. 4 together, the rail fracture decision system 10 and a method for deciding the occurrence of a rail fracture using the rail fracture decision system are explained together.

First, referring to FIG. 1 and FIG. 4, in the method for deciding the occurrence of a rail fracture, the measuring position setup part 100 determines a plurality of measuring positions having a reference point, and the measuring positions are different from each other (step S10). Here, for the convenience of the explanation, the measuring positions include four positions -2A, -A, R and A, but the number of the measuring positions may be decreased or increased.

Here, the measuring positions are illustrated as in FIG. 2, and as illustrated, the reference point R is included and other three measuring positions -2A, -A and A in relation to R are also included. Thus, four measuring positions may be defined.

The reference point R is the position at which the rail is decided to be fractured or not. To decide the rail fracture at the reference point R, three different measuring positions adjacent to each other should be defined.

Here, the first measuring position A is defined to be a position spaced apart from the reference point R by a first distance (A) along a train direction. The train direction is showed as an arrow in FIG. 2.

In addition, the second measuring position -A is defined to be a position spaced apart from the reference point R by the first distance, along a direction opposite to the train direction. Further, the third measuring position -2A is defined to be a position spaced apart from the second measuring position -A by the first distance, along the direction opposite to the train direction.

Thus, the third measuring position -2A is spaced apart from the reference point R by twice of the first distance, and is spaced apart from the first measuring position A by three times of the first distance.

Here, the first distance, as illustrated in FIG. 2, may be about 20 meters (m).

The reason why the first distance is defined as 20 m is explained referring to FIG. 3.

It is well known that the signal received at the measuring position from an arbitrary vibration is in inverse proportion to a distance between the measuring position and the vibration position, from J. Kim, "Rail break detection technology to replace additional functions of track circuit", in Proc. 2019, the Korean Society for Railway Fall Conf, Jeju, Korea, November 14. Thus, the signal received using distributed acoustic sensing DAS is expressed by Equation 1, when the train passes through a predetermined position.

$$I = \frac{P}{4\pi(x^2 + R^2)}$$

Equation 1

Here, I is a magnitude of the vibration received, P is an intensity of the vibration at the vibration position, x is a distance between an analyzing position (vibration receiving position) along an optical cable and a minimum distance to the vibration position along the optical cable, and R is a minimum distance (vertical distance) between the optical cable and the vibration position. Here, the vibration position is defined as the position wherein the vibration occurs.

For example, as illustrated in FIG. 3, the distance between the vibration position S and T and the measuring position of the optical cable.

Here, when the rail closest to the optical cable is fractured (position S and R=5m), the increased vibration is received maximally at X=0m (maximum receiving value), and the received value at X=5m is a half of the maximum receiving value. Further, the received value at X=10m is 1/5 of the maximum receiving value.

Alternatively, when the rail farthest to the optical cable (position T), R is increased at Equation 1, and thus the received value is decreased with respect to the maximum receiving value, by less than a specific rate, and here, a necessary x is also increased.

Further, for example, a distance between the centers of each of the double rails adjacent to each other may be 4 m, and a distance between the double rails adjacent to each other may be 1.435 m, and thus the maximum value of R may be 10.435 m when the optical cable is disposed as illustrated in FIG. 3. Thus, the received value may be about 1/5 of the maximum receiving value at x=20m, and the change or the variation of the data received or measured via using the DAS may be effectively detected.

Thus, in the present example embodiment, the first distance may be about 20m.

Here, when the first distance is about 20m, the speed of the train should be less than about 72 km/h (=20 m/s), and the first distance should be increased as the speed of the train increases.

For example, when the speed of the train is between about 72 km/h and about 90 km/h, the first distance may be about 25m. In addition, the speed of the train is between about 90 km/h and about 108 km/h, the first distance may be about 30m.

Accordingly, the measuring position setup part 100 determines the plurality of measuring positions having the reference point, and also determines the first distance between the measuring positions. Here, the measuring position setup part 100 may change the first distance considering the speed of the train.

Then, referring to FIG. 1 and FIG. 4, the signal measuring part 200 measures vibration signals at each of the measuring positions -2A, -A, R and A, when the train passes through the measuring positions -2A, -A, R and A (step S20).

Here, the signal measuring part 200, as explained above, measures the vibration signal using the DAS, and then, the vibration signals generated as the train passes through the measuring positions are measured through the optical cable connected to each of the measuring positions.

Accordingly, when the signal measuring part 200 measures the vibration signal at the measuring positions -2A, -A, R and A as the train passes through, the vibration in the frequency range corresponding to the vibration is increased as the train approaches the measuring positions, without the rail fracture. However, with the rail fracture around the reference point, the vibration is measured basically until the train passes through the reference point but the measured vibration is rapidly increased after the train passes through the reference point.

Based on the above mentioned variation characteristics of the vibration signals, the method for deciding the rail fracture is explained in detail below.

Referring to FIG. 1 and FIG. 4, in the signal measuring part 200, the data processing part 300 calculates a maximum value at the predetermined frequency range on the vibration signals measured at the reference point R and the first to third measuring positions -2A, -A and A (step S30).

Here, the predetermined frequency range may be, for example, between about 50 Hz and about 130 Hz.

In the frequency range between about 0 Hz and about 50 Hz, the vibration generated from the ground is measured, when the train passes through. Thus, in the present example embodiment, the maximum value may be calculated at the frequency range between about 50 Hz and about 130 Hz.

Accordingly, the data processing part 300 calculates the maximum values from the vibration signals measured at each of the reference point R and the first to third measuring positions -2A, -A and A, at the frequency range between about 50 Hz and about 300 Hz.

Alternatively, although not shown in the figure, the data processing part 300 may calculate the sum of the vibration signals measured at each of the reference point R and the first to third measuring positions -2A, -A and A, at the frequency range between about 50 Hz and about 300 Hz.

Accordingly, the sum of the measured vibration signals at each of the measuring positions means the total energy at the frequency range, and thus, the decision of the rail fracture may be performed more correctly.

However, in the present example embodiment, for the convenience of the explanation, deciding the rail fracture using the maximum values is explained, but in the following explanation, the maximum values among the vibration signals at each of the measuring positions may be replaced by the sum of the vibrations signals at each of the measuring positions. For example, the maximum values among the vibration signals measured at the reference point R, may be replaced by the sum of the vibration signals measured at the reference point R.

Generally, the vibration signal obtained using the DAS, may be expressed by a unit of $p\varepsilon$ when the DAS measures the vibration via a refractive index. In contrast, the vibration signal may be expressed by a unit of mV when the DAS measures the vibration via a voltage level.

Hereinafter, for the convenience of the explanation, the DAS is assumed to measure the vibration via the refractive index, and thus the vibration signal may be expressed by the unit of $p\varepsilon$, but not limited thereto.

Then, referring to FIG. 1 and FIG. 4, a first decision part 410 decides the rail fracture, based on whether a difference between the maximum value at the first measuring position A and the maximum value at the reference point R is less than a predetermined reference value (step S40).

Here, the predetermined reference value (hereinafter, reference value) may be, for example, about 10 $p\varepsilon$.

The first decision part 410 compares the vibration increased as the train moves from the reference point R to the first measuring position A, to the reference value. Then, when the increased vibration is less than the reference value, the rail is not fractured at the reference point R (step S60).

As for the train passing through the reference point R and the first measuring position A in series, the vibration is increased uniformly as the train passes from the reference point R to the first measuring position A, and thus the reference value is determined considering the above uniformly increased vibration. Thus, when the increased vibration is less than the reference value, the rail should be decided not to be fractured.

However, referring to FIG. 1 and FIG. 4, when the difference between the maximum value at the first measuring position A and the maximum value at the reference point R is more than the reference value (10 $p\varepsilon$)(step S40), the second decision part 420 additionally decides whether the rail is fractured or not.

Here, the second decision part 420 decides the rail fracture, based on whether the difference between the maximum value at the first measuring position A and the maximum value at the reference point R, is less than twice of a larger value between a first difference and a second difference (step S50). Here, the first difference is a difference between the maximum value at the second measuring position -A and the maximum value at the third measuring position -2A. In addition, the second difference is a difference between the maximum value at the reference point R and the maximum value at the second measuring position -A.

In other words, the vibration increased as the train passes from the reference point R to the first measuring position A, is compared to twice of the larger vibration between a first increased vibration and a second increased vibration. Here, the first increased vibration means the vibration increased as the train passes from the third measuring position -2A to the second measuring position -A, and the second increased vibration means the vibration increased as the train passes from the second measuring position -A to the reference point R.

Accordingly, when the vibration increased as the train passes from the reference point R to the first measuring position A is larger than the first increased vibration, the vibration is not transmitted to the analyzing position due to the fracture of the rail at the reference point R until the train approaches the reference point R, and the vibration is transmitted rapidly after the train passes through the reference point R.

Thus, when the second decision part 420 decides that the difference between the maximum value at the first measuring position A and the maximum value at the reference point R, is less than twice of the larger value between the first difference and the second difference (step S50), the rail is decided not to be fractured yet at the reference point R (step S60).

However, when the second decision part 420 decides that the difference between the maximum value at the first measuring position A and the maximum value at the reference point R, is more than twice of the larger value between the first difference and the second difference (step S50), the rail is decided to be fractured at the reference point R (step S70).

Accordingly, in deciding the rail fracture, the above mentioned two conditions should be satisfied, and thus, the deciding results on the rail fracture may be more correctly and more reliable.

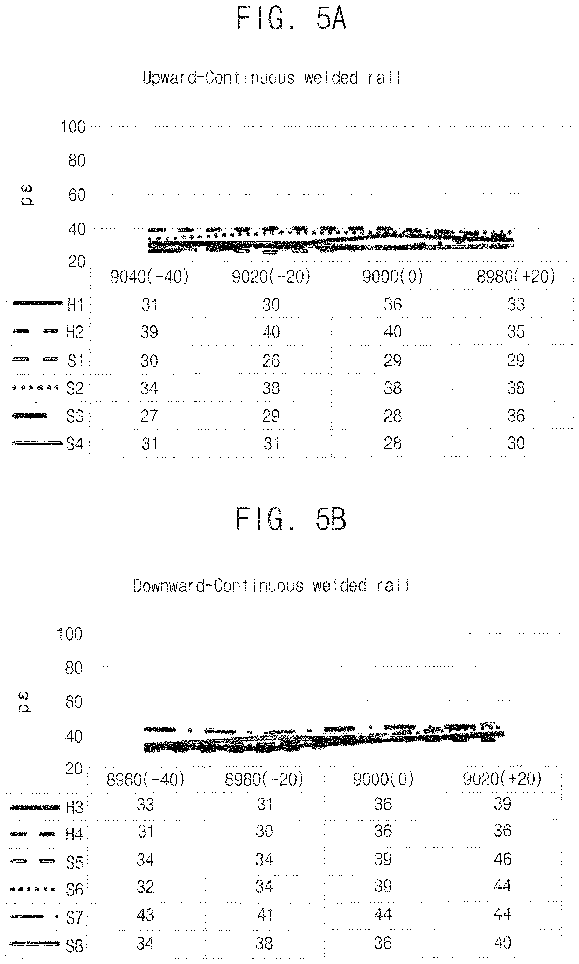

FIGS. 5A and 5B are graphs showing a relation between a distance and a refractive index in a welded rail. Here, FIG. 5A is the graph showing the relation between the distance and the refractive index along a northbound (upward) section of a predetermined section, and FIG. 5B is the graph showing the relation between the distance and the refractive index along a southbound (downward) section thereof.

In FIGS. 5A and 5B, as explained above, the reference point R and the first to third measuring positions -2A, -A and A are determined by the first distance 20 m, and the vibration signals are measured at each of the measuring points -2A, -A, A and R, and then the graph on the increasing vibration is obtained.

Referring to FIGS. 5A and 5B, in a continuous welded rail in which no rail fracture occurs and the rail extends relatively longer, the vibration increases uniformly as the train passes through but the amount of the vibration is not too much. Further, sometimes the vibration is decreased.

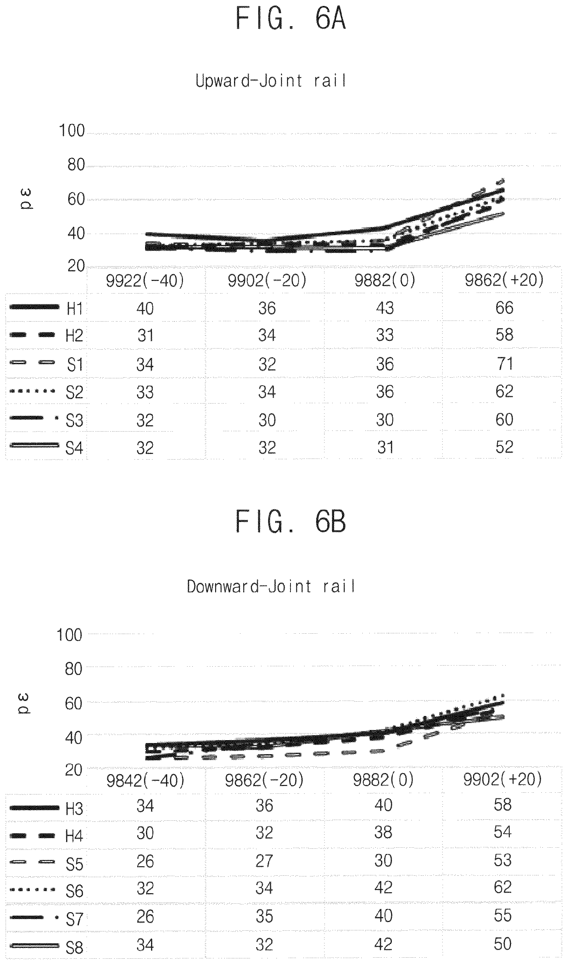

FIGS. 6A and 6B are graphs showing a relation between a distance and a refractive index in a joint rail. Here, FIG. 6A is the graph showing the relation between the distance and the refractive index along the northbound (upward) section of the predetermined section, and FIG. 6B is the graph showing the relation between the distance and the refractive index along the southbound (downward) section thereof.

In FIGS. 6A and 6B, as explained above, the reference point R and the first to third measuring positions -2A, -A and A are determined by the first distance 20 m, and the vibration signals are measured at each of the measuring points -2A, -A, A and R, and then the graph on the increasing vibration is obtained.

Referring to FIGS. 6A and 6B, in a joint rail in which the rail fracture occurs and the rail extends relatively shorter, the vibration rapidly increases after the train passes through the reference point R in which the rail fracture is decided. Thus, based on the rapid increase of the vibration, the first decision part 410 and the second decision part 420 decides that the rail fracture occurs.

Accordingly, when the rail is fractured, the variation of the vibration measured at the positions after the train passes through the fractured point is different from the vibration measured at the normal rail, and thus the first and second decision parts 410 and 420 may decide whether the rail is fractured at the reference point based on the above mentioned conditions.

According to the present example embodiments, vibrating increasing at the reference point and the measuring positions is used for deciding the rail fracture, which means that a relative signal variation among the reference point and the measuring positions. Even though the vibrations are caused by an environmental sources around the rail, the signals are not distorted and thus the rail fracture decision may be more corrected and the database may not to be updated frequently.

Here, considering the rail standard and the data using DAS, the distances between the reference point and the measuring positions may be determined as, for example, about 20 m.

In addition, the vibration signals are measured using the DAS, the signal at a predetermined position and a predetermined time is detected more easily and more efficiently, using an optical cable disposed under the ground adjacent to the rail. the measured value at the frequency range between about 50 Hz and about 130 Hz, from the vibration signals of each of the measuring positions, and thus, the signal under the frequency of about 50 Hz, in which the friction or the impact vibration signal between a wheel of the train and the rail is transmitted, is escaped. Thus, the rail fracture may be decided more correctly.

In addition, a plurality of measuring positions are used to decide the rail fracture, instead of a single position, and the relatively increased vibration signals among the measuring positions and the plurality of deciding references are used to decide the rail fracture. Thus, the rail fracture may be decided more correctly, and the reliability of the decision may be increased.

Although the exemplary embodiments of the present invention have been described, it is understood that the present invention should not be limited to these exemplary embodiments but various changes and modifications can be made by one ordinary skilled in the art within the scope of the claims.

**Claims**

1. A rail fracture decision system (10) comprising:

   a measuring position setup part (100) configured to determine a plurality of measuring positions having a reference point (R), the measuring positions being different from each other;
   a signal measuring part (200) comprising vibration sensors configured to measure vibration signals at each of the measuring positions, when a train passes through the measuring positions having the reference point (R);

a data processing part (300) configured to calculate a maximum value at a predetermined frequency range on the measured vibration signals; and

a decision part (400) configured to calculate variation of the vibration signals at the measuring positions, based on the calculated maximum values, and to decide whether a rail is fractured at the reference point (R),

wherein the measuring positions where the sensors are disposed comprise:

the reference point (R);

a first measuring position (R+A) spaced apart from the reference point (R) by a first distance (A), along a train direction;

a second measuring position (R-A) spaced apart from the reference point (R) by the first distance (A) along a direction opposite to the train direction; and

a third measuring position (R-2A) spaced apart from the second measuring position (R-A) by the first distance (A), along the direction opposite to the train direction,

**characterised in that** the decision part (400) comprises:

a first decision part (410) configured to decide whether there is a rail fracture at the reference point (R), based on whether a difference between the maximum value at the first measuring position (R+A) and the maximum value at the reference point (R) is more than a predetermined reference value; and

a second decision part (420) configured to decide whether there is a rail fracture at the reference point (R), based on whether the difference between the maximum value at the first measuring position (R+A) and the maximum value at the reference point (R), is less than twice of a larger value between a first difference and a second difference, wherein the first difference is a difference between the maximum value at the second measuring position (R-A) and the maximum value at the third measuring position (R-2A),

wherein the second difference is a difference between the maximum value at the reference point (R) and the maximum value at the second measuring position (R-A).

2. The rail fracture decision system (10) of claim 1, wherein the first distance (A) is changed along a train speed, and the first distance is about 20 m

3. The rail fracture decision system (10) of claim 1, wherein the data processing part (300) is configured to calculate the maximum value at the frequency range between about 50 Hz and about 130 Hz, from the vibration signals measured at each of the reference point (R), the first measuring position (R+A), the second measuring position (R-A) and the third measuring position (R-2A)

4. The rail fracture decision system (10) of claim 1, wherein the data processing part (300) is configured to calculate the sum of the vibration signals at the frequency range between about 50 Hz and about 130 Hz, from the vibration signals measured at each of the reference point (R), the first measuring position (R+A), the second measuring position (R-A) and the third measuring position (R-2A).

5. A method for deciding whether or not a rail fracture has occurred comprising:

determining (S10) a plurality of measuring positions having a reference point (R), the measuring positions being different from each other;

measuring (S20) vibration signals at each of the measuring positions, when a train passes through the measuring positions having the reference point (R);

calculating (S30) a maximum value at a predetermined frequency range on the measured vibration signals; and

calculating variation of the vibration signals at the measuring positions, based on the calculated maximum values, and to decide whether a rail is fractured at the reference point (R),

wherein the measuring positions comprises:

the reference point (R);

a first measuring position (R+A) spaced apart from the reference point (R) by a first distance (A), along a train direction;

a second measuring position (R-A) spaced apart from the reference point (R) by the first distance, along a direction opposite to the train direction; and

a third measuring position (R-2A) spaced apart from the second measuring position (R-A) by the first distance, along the direction opposite to the train direction,

wherein in the deciding whether the rail is fractured, the rail is decided not to be fractured (S60) at the reference point (R), when a difference between the maximum value at the first measuring position (R+A) and the maximum value at the reference point (R) is less than a predetermined reference value, **characterised in that** in the deciding whether the rail is fractured, the rail is decided to be fractured (S70) at the reference point (R), when satisfying first and second conditions,

wherein the first condition (S40) is that, the difference between the maximum value at the first measuring position (R+A) and the maximum value at the reference point (R) is more than a predetermined reference value,

wherein the second condition (S50) is that, the difference between the maximum value at the first measuring position (R+A) and the maximum value at the reference point (R), is less than twice of a larger value between a first difference and a second difference, wherein the first difference is a difference between the maximum value at the second measuring position (R-A) and the maximum value at the third measuring position (R-2A) wherein the second difference is a difference between the maximum value at the reference point (R) and the maximum value at the second measuring position (R-A).

6. The method for deciding whether or not a rail fracture has occurred according to claim 5, wherein in the calculating the maximum value, the maximum value is calculated at the frequency range between about 50 Hz and about 130 Hz, from the vibration signals measured at each of the reference point (R), the first measuring position (R+A), the second measuring position (R-A) and the third measuring position (R-2A).

7. The method for deciding whether or not a rail fracture has occurred claim 5, wherein in the calculating the maximum value, the sum of the vibration signals is calculated at the frequency range between about 50 Hz and about 130 Hz, from the vibration signals measured at each of the reference point (R), the first measuring position (R+A), the second measuring position (R-A) and the third measuring position (R-2A).

**Patentansprüche**

1. Schienenbruch-Entscheidungssystem (10), umfassend:

   Einen Messpositions-Einrichtungsteil (100), konfiguriert, um eine Vielzahl von Messpositionen mit einem Referenzpunkt (R) festzulegen, wobei sich die Messpunkte voneinander unterscheiden;
   einen Signalmessteil (200), der Schwingungssensoren umfasst, die konfiguriert sind, die Schwingungssignale an jeder der Messpositionen zu messen, wenn ein Zug durch die Messpositionen mit dem Referenzpunkt (R) hindurchfährt;
   einen Datenverarbeitungsteil (300), der konfiguriert ist, einen Höchstwert in einem vorbestimmten Frequenzbereich an den gemessenen Schwingungssignalen zu berechnen; und
   einen Entscheidungsteil (400), der konfiguriert ist, eine Abweichung der Schwingungssignale an den Messpositionen zu berechnen, basierend auf den berechneten Höchstwerten, und zu entscheiden, ob eine Schiene an dem Referenzpunkt (R) gebrochen ist,
   wobei die Messpositionen, an denen die Sensoren angeordnet sind, Folgendes umfassen:

   Den Referenzpunkt (R);
   eine erste Messposition (R+A) von dem Referenzpunkt (R) in einem ersten Abstand (A), entlang einer Zugrichtung, getrennt;
   eine zweite Messposition (R-A) von dem Referenzpunkt (R) in dem ersten Abstand (A) entlang einer der Zugrichtung entgegengesetzten Richtung, getrennt; und
   eine dritte Messposition (R-2A) von der zweiten Messposition (R-A) in dem ersten Abstand (A) entlang einer der Zugrichtung entgegengesetzten Richtung, getrennt,
   **dadurch gekennzeichnet, dass** der Entscheidungsteil (400) Folgendes umfasst:

   einen ersten Entscheidungsteil (410), der konfiguriert ist, zu entscheiden, ob ein Bruch am Referenzpunkt (R) vorliegt, basierend darauf, ob eine Differenz zwischen dem Höchstwert an der ersten Messposition (R+A) und dem Höchstwert an dem Referenzpunkt (R) größer ist als ein vorbestimmter Referenzwert, und
   einen zweiten Entscheidungsteil (420), der konfiguriert ist, zu entscheiden, ob ein Schienenbruch am Referenzpunkt (R) vorliegt, basierend darauf, ob die Differenz zwischen dem Höchstwert an der ersten Messposition (R+A) und

dem Höchstwert an dem Referenzpunkt (R) weniger als doppelt so groß ist als ein höherer Wert zwischen einer ersten Differenz und einer zweiten Differenz, wobei die erste Differenz eine Differenz zwischen dem Höchstwert an der zweiten Messposition (R-A) und
dem Höchstwert an der dritten Messposition (R-2A) ist,
wobei die zweite Differenz eine Differenz zwischen dem Höchstwert an dem Referenzpunkt (R) und dem Höchstwert an der zweiten Messposition (R-A) ist

2. Das Schienenbruch-Entscheidungssystem (10) nach Anspruch 1, wobei der erste Abstand (A) entlang einer Zuggeschwindigkeit geändert wird, und der erste Abstand ungefähr 20 m beträgt.

3. Das Schienenbruch-Entscheidungssystem (10) nach Anspruch 1, wobei der Datenverarbeitungsteil (300) konfiguriert ist, den Höchstwert in dem Frequenzbereich zwischen ungefähr 50 Hz und ungefähr 130 Hz aus den Schwingungssignalen zu berechnen, die an dem jeweiligen Referenzpunkt (R), der ersten Messposition (R+A), der zweiten Messposition (R-A) und der dritten Messposition (R-2A) gemessen werden.

4. Das Schienenbruch-Entscheidungssystem (10) nach Anspruch 1, wobei der Datenverarbeitungsteil (300) konfiguriert ist, den Höchstwert in dem Frequenzbereich zwischen ungefähr 50 Hz und ungefähr 130 Hz aus den Schwingungssignalen zu berechnen, die an dem jeweiligen Referenzpunkt (R), der ersten Messposition (R+A), der zweiten Messposition (R-A) und der dritten Messposition (R-2A) gemessen werden.

5. Verfahren, um zu entscheiden, ob ein Schienenbruch aufgetreten ist oder nicht, umfassend:

Festlegen (S10) einer Vielzahl von Messpositionen mit einem Referenzpunkt (R), wobei sich die Messpunkte voneinander unterscheiden;
Messen (S20) der Schwingungssignale an jeder der Messpositionen, wenn ein Zug durch die Messpositionen mit dem Referenzpunkt (R) hindurchfährt;
Berechnen (S30) eines Höchstwerts in einem vorbestimmten Frequenzbereich an den gemessenen Schwingungssignalen; und
Berechnen einer Abweichung der Schwingungssignale an den Messpositionen, basierend auf den berechneten Höchstwerten, und entscheiden, ob eine Schiene an dem Referenzpunkt (R) gebrochen ist,
wobei die Messpositionen Folgendes umfassen:

Den Referenzpunkt (R);
eine erste Messposition (R+A) von dem Referenzpunkt (R) in einem ersten Abstand (A), entlang einer Zugrichtung, getrennt;
eine zweite Messposition (R-A) von dem Referenzpunkt (R) in dem ersten Abstand, entlang einer der Zugrichtung entgegengesetzten Richtung, getrennt; und
eine dritte Messposition (R-2A) von der zweiten Messposition (R-2A) in dem ersten Abstand, entlang einer der Zugrichtung entgegengesetzten Richtung, getrennt,
wobei bei der Entscheidung, ob die Schiene gebrochen ist, entschieden wird, dass sie an dem Referenzpunkt (R) nicht gebrochen ist (S60), wenn eine Differenz zwischen dem Höchstwert an der ersten Messposition (R+A) und dem Höchstwert am Referenzpunkt (R) geringer ist als ein vorbestimmter Referenzwert,
**dadurch gekennzeichnet, dass** bei der Entscheidung, ob die Schiene gebrochen ist, entschieden wird, dass die Schiene am Referenzpunkt (R) gebrochen ist, wenn die erste und die zweite Bedingung erfüllt sind,
wobei die erste Bedingung (S40) so ist, dass die Differenz zwischen dem Höchstwert an der ersten Messposition (R+A) und der Höchstwert an dem Referenzpunkt (R) mehr als ein vorbestimmter Referenzwert ist,
wobei die zweite Bedingung (S50) so ist, dass die Differenz zwischen dem Höchstwert an der ersten Messposition (R+A) und der Höchstwert am Referenzpunkt (R) weniger als doppelt so groß ist wie ein höherer Wert zwischen einer ersten Differenz und einer zweiten Differenz,
wobei die erste Differenz eine Differenz zwischen dem Höchstwert an der zweiten Messposition und dem Höchstwert an der dritten Messposition (R-2A) ist,
wobei die zweite Differenz eine Differenz zwischen dem Höchstwert an dem Referenzpunkt (R) und dem Höchstwert an der zweiten Messposition (R-A) ist.

6. Verfahren, um zu entscheiden, ob ein Schienenbruch nach Anspruch 5 aufgetreten ist oder nicht, wobei beim Berechnen des Höchstwerts der Höchstwert in dem Frequenzbereich zwischen ungefähr 50 Hz und ungefähr 130 Hz aus den Schwingungssignalen berechnet wird, die an dem jeweiligen Referenzpunkt (R), der ersten Messposition (R+A), der zweiten Messposition (R-A) und der dritten Messposition (R-2A) gemessen werden.

7. Verfahren, um zu entscheiden, ob der Schienenbruch nach Anspruch 5 aufgetreten ist, wobei beim Berechnen des Höchstwerts, die Summe der Schwingungssignale in dem Frequenzbereich zwischen ungefähr 50 Hz und ungefähr 130 Hz aus den Schwingungssignalen berechnet wird, die an dem jeweiligen Referenzpunkt (R), der ersten Messposition (R+A), der zweiten Messposition (R-A) und der dritten Messposition (R-2A) gemessen werden.

**Revendications**

1. Système de décision de rupture de rail (10) comprenant :

   une partie de configuration de la position de mesure (100) conçue pour déterminer une pluralité de positions de mesure présentant un point de référence (R), les positions de mesure étant différentes les unes des autres ;
   une partie de mesure du signal (200) comprenant des capteurs de vibration conçus pour mesurer les signaux de vibration à chacune des positions de mesure, lorsqu'un train passe par les positions de mesure présentant le point de référence (R) ;
   une partie de traitement des données (300) conçue pour calculer une valeur maximale à une plage de fréquences prédéfinie sur les signaux de vibration mesurés ; et
   une partie de décision (400) conçue pour calculer la variation des signaux de vibration aux positions de mesure, sur la base des valeurs maximales calculées et pour décider si oui ou non un rail est rompu au point de référence (R),
   dans lequel les positions de mesure où les capteurs sont disposés comprennent :

   le point de référence (R) ;
   une première position de mesure (R+A) espacée du point de référence (R) d'une première distance (A), le long de la direction du train ;
   une deuxième position de mesure (R-A) espacée du point de référence (R) de la première distance (A) le long d'une direction opposée à la direction du train ; et
   une troisième position de mesure (R-2A) espacée de la deuxième position de mesure (R-A) par la première distance (A) le long de la direction opposée à la direction du train,
   **caractérisé en ce que** la partie de décision (400) comprend :

   une première partie de décision (410) conçue pour décider s'il existe ou non une rupture au point de référence (R), en fonction de si oui ou non la différence entre la valeur maximale à la première position de mesure (R+A) et la valeur maximale au point de référence (R) qui est supérieure à une valeur de référence prédéfinie ; et
   une seconde partie de décision (420) conçue pour décider s'il existe ou non une rupture de rail au point de référence (R), en fonction de si oui ou non la différence entre la valeur maximale à la première position de mesure (R+A) et
   la valeur maximale au point de référence (R) est inférieure au double d'une plus grande valeur entre une première différence et une seconde différence, lequel la première différence est une différence entre la valeur maximale à la deuxième position de mesure (R-A) et
   la valeur maximale à la troisième position de mesure (R-2A).
   dans lequel la seconde différence est une différence entre la valeur maximale au point de référence (R) et la valeur maximale à la deuxième position de mesure (R-A).

2. Système de décision de rupture de rail (10) selon la revendication 1, dans lequel la première distance (A) est modifiée conformément à la vitesse du train et la première distance est d'environ 20 m.

3. Système de décision de rupture de rail (10) selon la revendication 1, dans lequel la partie de traitement des données (300) est conçue pour calculer la valeur maximale dans la plage de fréquences comprise entre environ 50 Hz et environ 130 Hz, à partir des signaux de vibration mesurés à chacun des points de référence (R), à la première position de mesure (R+A), à la deuxième position de mesure (R-A) et à la troisième position de mesure (R-2A).

4. Système de décision de rupture de rail (10) selon la revendication 1, dans lequel la partie de traitement des données (300) est conçue pour calculer la somme des signaux de vibration dans la plage de fréquences comprise entre environ 50 Hz et environ 130 Hz, à partir des signaux de vibration mesurés à chacun des points de référence (R), de la première position de mesure (R+A), de la deuxième position de mesure (R-A) et de la troisième position de mesure (R-2A).

**5.** Procédé destiné à déterminer si oui ou non une rupture de rail s'est produite, comprenant :

la détermination (S10) d'une pluralité de positions de mesure présentant un point de référence (R), les positions de mesure étant différentes les unes des autres ;
la mesure (S20) des signaux de vibration à chacune des positions de mesure, lorsqu'un train passe par les positions de mesure présentant le point de référence (R) ;
le calcul (S30) d'une valeur maximale à une plage de fréquences prédéfinie sur les signaux de vibration mesurés ; et
le calcul de la variation des signaux de vibration aux positions de mesure, sur la base des valeurs maximales calculées et pour décider si oui ou non un rail est rompu au point de référence (R),
dans lequel les positions de mesure comprennent :

le point de référence (R) ;
une première position de mesure (R+A) espacée du point de référence (R) d'une première distance (A), le long de la direction du train ;
une deuxième position de mesure (R-A) espacée du point de référence (R) de la première distance, le long d'une direction opposée à la direction du train ; et
une troisième position de mesure (R-2A) espacée de la deuxième position de mesure (R-A) par la première distance le long de la direction opposée à la direction du train,
dans lequel, pour décider si oui ou non le rail est rompu, il est décidé que le rail n'est pas rompu (S60) au point de référence (R), lorsqu'une différence entre la valeur maximale à la première position de mesure (R+A) et la valeur maximale au point de référence (R) est inférieure à une valeur de référence prédéfinie, **caractérisé en ce que**, pour décider si oui ou non le rail est rompu, il est décidé que le rail est rompu (S70) au point de référence (R), lorsqu'il satisfait aux première et deuxième conditions,
dans lequel la première condition (S40) est que la différence entre la valeur maximale à la première position de mesure (R+A) et la valeur maximale au point de référence (R) est supérieure à une valeur de référence prédéfinie,
dans lequel la deuxième condition (S50) est que la différence entre la valeur maximale à la première position de mesure (R+A) et la valeur maximale au point de référence (R) est inférieure au double d'une valeur plus grande entre une première différence et une seconde différence,
dans lequel la première différence est une différence entre la valeur maximale à la deuxième position de mesure et la valeur maximale à la troisième position de mesure (R-2A).
dans lequel la seconde différence est une différence entre la valeur maximale au point de référence (R) et la valeur maximale à la deuxième position de mesure (R-A).

**6.** Procédé destiné à décider si oui ou non une rupture de rail s'est produite selon la revendication 5, dans lequel dans le calcul de la valeur maximale, la valeur maximale est calculée dans la plage de fréquences comprise entre environ 50 Hz et environ 130 Hz, à partir des signaux de vibration mesurés à chacun des points de référence (R), à la première position de mesure (R+A), à la deuxième position de mesure (R-A) et à la troisième position de mesure (R-2A).

**7.** Procédé destiné à décider si oui ou non une rupture de rail s'est produite selon la revendication 5, dans lequel dans le calcul de la valeur maximale, la somme des signaux de vibration est calculée dans la plage de fréquences comprise entre environ 50 Hz et environ 130 Hz, à partir des signaux de vibration mesurés à chacun des points de référence (R), à la première position de mesure (R+A), à la deuxième position de mesure (R-A) et à la troisième position de mesure (R-2A).

# FIG. 1

EP 3 910 301 B1

# FIG. 2

FIG. 3

EP 3 910 301 B1

# FIG. 4

START

DETERMINING FOUR MEASURING POSITIONS
HAVING A REFERENCE POINT (-2A, -A, R, A) — S10

MEASURING VIBRATION SIGNALS AT THE
FOUR MEASURING POSITIONS, WHEN A
TRAIN PASSES THROUGH THE MEASURING
POSITIONS HAVING THE REFERENCE POINT — S20

CALCULATING A MAXIMUM VALUE AT A
PREDETERMINED FREQUENCY RANGE ON THE
MEASURED VIBRATION SIGNALS — S30

S40

IS A DIFFERENCE
BETWEEN THE MAXIMUM VALUE AT THE
FIRST MEASURING POSITION AND THE MAXIMUM
VALUE AT THE REFERENCE POINT, LESS THAN
A PREDETERMINED REFERENCE
VALUE?

YES

NO

S50

IS THE
DIFFERENCE BETWEEN THE
MAXIMUM VALUE AT THE FIRST MEASURING
POSITION AND THE MAXIMUM VALUE AT THE REFERENCE
POINT, MORE THAN TWICE OF A LARGER VALUE
BETWEEN A FIRST DIFFERENCE AND A
SECOND DIFFERENCE?

YES

NO

THE RAIL IS DECIDED TO BE
FRACTURED AT THE REFERENCE POINT — S70

S60

THE RAIL IS DECIDED NOT TO BE
FRACTURED AT THE REFERENCE POINT

END

# FIG. 5A

Upward-Continuous welded rail

| | 9040(-40) | 9020(-20) | 9000(0) | 8980(+20) |
|---|---|---|---|---|
| H1 | 31 | 30 | 36 | 33 |
| H2 | 39 | 40 | 40 | 35 |
| S1 | 30 | 26 | 29 | 29 |
| S2 | 34 | 38 | 38 | 38 |
| S3 | 27 | 29 | 28 | 36 |
| S4 | 31 | 31 | 28 | 30 |

# FIG. 5B

Downward-Continuous welded rail

| | 8960(-40) | 8980(-20) | 9000(0) | 9020(+20) |
|---|---|---|---|---|
| H3 | 33 | 31 | 36 | 39 |
| H4 | 31 | 30 | 36 | 36 |
| S5 | 34 | 34 | 39 | 46 |
| S6 | 32 | 34 | 39 | 44 |
| S7 | 43 | 41 | 44 | 44 |
| S8 | 34 | 38 | 36 | 40 |

# FIG. 6A

Upward-Joint rail

| | 9922(-40) | 9902(-20) | 9882(0) | 9862(+20) |
|---|---|---|---|---|
| H1 | 40 | 36 | 43 | 66 |
| H2 | 31 | 34 | 33 | 58 |
| S1 | 34 | 32 | 36 | 71 |
| S2 | 33 | 34 | 36 | 62 |
| S3 | 32 | 30 | 30 | 60 |
| S4 | 32 | 32 | 31 | 52 |

# FIG. 6B

Downward-Joint rail

| | 9842(-40) | 9862(-20) | 9882(0) | 9902(+20) |
|---|---|---|---|---|
| H3 | 34 | 36 | 40 | 58 |
| H4 | 30 | 32 | 38 | 54 |
| S5 | 26 | 27 | 30 | 53 |
| S6 | 32 | 34 | 42 | 62 |
| S7 | 26 | 35 | 40 | 55 |
| S8 | 34 | 32 | 42 | 50 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6297280 B

- WO 2018048308 A1

**Non-patent literature cited in the description**

- **WIESMEYR CHRISTOPH et al.** *Real-Time Train Tracking from Distributed Acoustic Sensing Data*
- **CEDILNIK GREGOR et al.** *Advances in Train and Rail Monitoring with DAS*

- **J. KIM.** Rail break detection technology to replace additional functions of track circuit. *Proc. 2019, the Korean Society for Railway Fall Conf, Jeju, Korea,* 14 November 2019